(19) Europäisches Patentamt / European Patent Office / Office européen des brevets

(11) **EP 1 880 940 A1**

(12) **EUROPEAN PATENT APPLICATION**

(43) Date of publication:
**23.01.2008 Bulletin 2008/04**

(51) Int Cl.:
***B64D 13/06*** (2006.01)

(21) Application number: **07252624.7**

(22) Date of filing: **28.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **21.07.2006 US 491451**

(71) Applicant: **Hamilton Sundstrand Corporation Windsor Locks, CT 06096-1010 (US)**

(72) Inventors:
• **Coates, Laura**
  **Windsor Locks, CT 06096 (US)**
• **Harris, Mark L.**
  **Peabody, MA 01960 (US)**
• **Spack, Jeff**
  **Broad Brook, CT 06016 (US)**
• **Hipsky, Harold**
  **Willington, CT 06279 (US)**

(74) Representative: **Tomlinson, Kerry John Frank B. Dehn & Co. St Bride's House 10 Salisbury Square London EC4Y 8JD (GB)**

(54) **System and method for controlling compressor flow**

(57) A system for controlling air flow comprises an inlet (50), a first compressor (54), a first pressure sensor (52), a second pressure sensor (56), a first temperature sensor (58), and a first controller (51). The inlet is configured to direct a first stream of air into the system. The first compressor is configured to pull in the first stream of air through the inlet and compress the first stream of air. The first pressure sensor senses a first pressure of the first stream of air prior to compression in the first compressor, the second pressure sensor senses a second pressure of the first stream of air after compression in the first compressor, and the first temperature sensor senses a temperature of the first stream of air after compression in the first compressor. The controller (51) adjusts a speed of the first compressor (54) based upon a comparison between a desired flow rate and a calculated flow rate.

Fig. 4

EP 1 880 940 A1

**Description**

## BACKGROUND

The present invention relates to heating and cooling systems. More particularly, the present invention relates to controlling flow through a compressor.

In typical aircraft cabin heating and air conditioning systems, the air used to heat or cool the cabin originates from the compressor stages in the engines of the aircraft. In particular, two streams of air are usually diverted away from the engine and into the temperature control system. In one common system, a modulation valve is used to pull a low stage stream of air and a high stage stream of air into the system. Because the temperature control system is at a different pressure than the low stage and high stage streams of air, the two streams flow into the temperature control system without the use of a fan or similar air device capable of inducing flow. The first, low stage stream of air is pulled off of the engine at a location where the air is at a low pressure and low temperature. The second, high stage stream of air is pulled off of the engine at a second location where the air is at a high pressure and high temperature. The low and high stage streams of air are then mixed together in varying proportions to obtain a desired air mixture, which is then distributed through the temperature control system and into the cabin of the aircraft.

Many newer aircraft cabin heating and air conditioning systems include air cycle machines. In these types of systems, outside air is pulled into the aircraft and provided to the air cycle machines where it is used as a refrigerant. In order to provide proper temperature control within the aircraft, the flow rate of air provided to the air cycle machines must be monitored and controlled. Thus, there exists a need for a system that is capable of determining and controlling flow through a compressor.

## BRIEF SUMMARY

The present invention is a system for controlling air flow comprising an inlet, a first compressor, a first pressure sensor, a second pressure sensor, a first temperature sensor, and a first controller. The inlet is configured to direct a first stream of air into the system. The first compressor is configured to pull in the first stream of air through the inlet and compress the first stream of air. The first pressure sensor senses a first pressure of the first stream of air prior to compression in the first compressor, the second pressure sensor senses a second pressure of the first stream of air after compression in the first compressor, and the first temperature sensor senses a temperature of the first stream of air after compression in the first compressor. The controller adjusts speed of the first compressor based upon a comparison between a desired flow rate and a calculated flow rate.

## BRIEF DESCRIPTION OF THE DRAWINGS

FIG. 1 is a schematic cross-sectional view of a commercial aircraft.
FIG. 2 is a schematic diagram of one embodiment of a temperature control system.
FIG. 3 is a schematic diagram of a flow control system according to the present invention having one air supply circuit.
FIG. 4 is a schematic diagram of a flow control system according to the present invention having a pair of air supply circuits.
FIG. 5 is a process flow diagram of a method for calculating compressor flow.
FIG. 6 is a bi-variant graph depicting a corrected flow characteristic.
FIG. 7 is a process flow diagram of a method for adjusting compressor flow rate as a function of a compressor speed reference.

## DETAILED DESCRIPTION

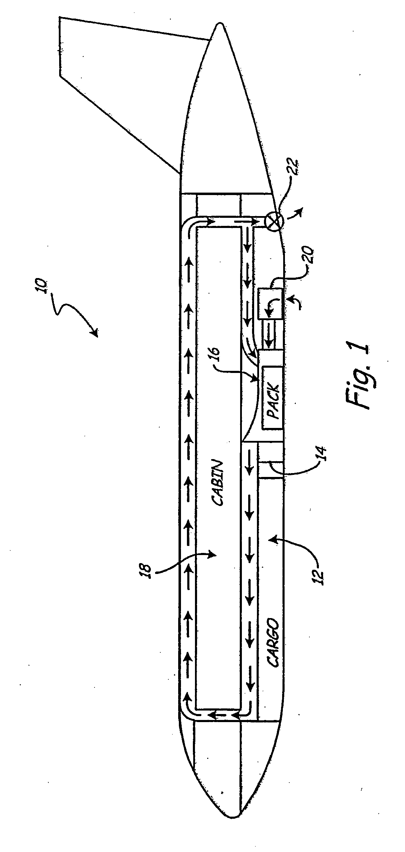

A high level schematic cross-sectional view of commercial aircraft 10 is shown in FIG. 1. Aircraft 10 includes cargo area 12, electronics power bay 14, temperature control system 16, cabin area 18, flow control system 20, and outflow valve 22. Cargo area 12 is located within the lower portion of aircraft 10. Cargo area 12 typically serves as storage for passenger luggage, but it may also include one or more power electronics power bays 14 housing various electronic components used in the control and operation of aircraft 10. As shown in FIG. 1, temperature control system 16 is also located within the lower portion of aircraft 10, and is configured to provide temperature conditioned air to cabin area 18 for passenger comfort and safety. Temperature control system 16 typically includes one or more air conditioning packs ("packs"), which are typically air cycle machines that use air as a refrigerant.

Temperature control system 16 is supplied with pressurized outside (fresh) air from flow control system 20 to allow temperature control system 16 to condition fresh air for cabin heating and cooling. Thus, flow control system 20 controls the amount of outside air pulled into aircraft 10 for use in temperature control system 16. Supplying the proper amount of outside air to temperature control system 16 is critical to the comfort and safety of passengers within cabin 18. If too much outside air is pulled into temperature control system 16, there is a risk that very hot, high pressure air will be distributed into cabin 18. On the other hand, if too little outside air is pulled into temperature control system 16, there is a risk that very cold, low pressure air will be distributed into cabin 18. Moreover, the Federal Aviation Administration (FAA) has strict guidelines pertaining to the amount of air that must be circulated through a cabin during a flight. For example, in one common model of passenger aircraft, the FAA has dictated that 0.55 pounds per minute (4.2 g/s) per occupant must be circulated through the cabin. As a result, it is important that flow control system 20 accurately control the flow of outside air it supplies to temperature control system 16.

After leaving temperature control system 16, the conditioned air is circulated through cabin 18 and redirected back to the lower portion of aircraft 10 where a portion of the air is exhausted through outflow valve 22 to the outside environment. The remaining portion of the air is recirculated back to temperature control system 16, where it mixes with a new batch of outside air pulled in through flow control system 20 and delivered to temperature control system 16. In typical aircraft temperature control systems, the ratio of recirculated air to new, outside air is approximately one-to-one.

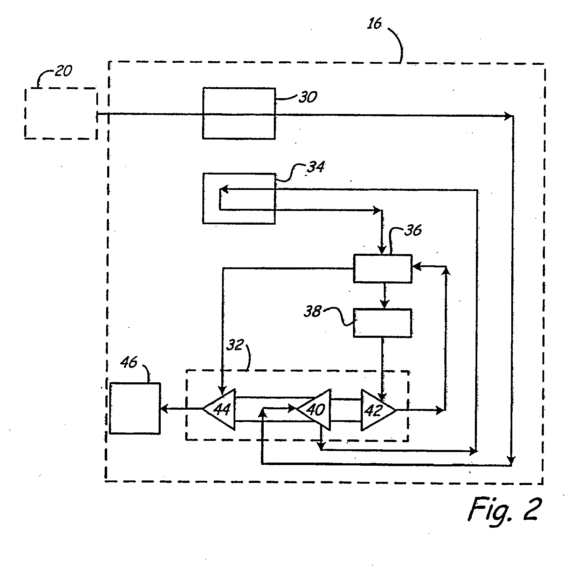

FIG. 2 is a schematic diagram of one embodiment of temperature control system 16. In FIG. 2, flow control system 20 pulls in and controls the flow of air into temperature control system 16. Temperature control system 16 includes primary heat exchanger 30, dual turbine air cycle machine (ACM) 32, secondary heat exchanger 34, condenser 36, and water collector 38. Dual turbine ACM 32 includes compressor 40, first stage turbine 42, and second stage turbine 44.

The stream of compressed air enters temperature control system 16 and is cooled in primary heat exchanger 30 using ram air as a heat sink. The stream of compressed air is then further compressed by compressor 40 of dual turbine ACM 32 and subsequently ported to secondary heat exchanger 34. In secondary heat exchanger 34, the heat of compression resulting from compression within compressor 40 is removed, again using a source of ram air as the heat sink. The compressed air from secondary heat exchanger 34 is then routed to condenser 36 where it is subcooled using cold exhaust air from first stage turbine 42 as the heat sink. This cooling process condenses water from the air to permit it to be collected by water collector 38. The collected water in water collector 38 may subsequently be directed to secondary heat exchanger 34 to enhance heat exchanger performance through evaporative cooling.

After exiting water collector 38, the air flows to first stage turbine 42. After expansion within first stage turbine 42, the air passes through a cold side portion of condenser 36 where it serves as the heat sink for condensation as described above. After regaining the heat of condensation and exiting the cold side of condenser 36, the air enters second stage turbine 44 of dual turbine ACM 32 where it is further expanded and routed to air distribution system 46 to provide a cold air source for cabin cooling.

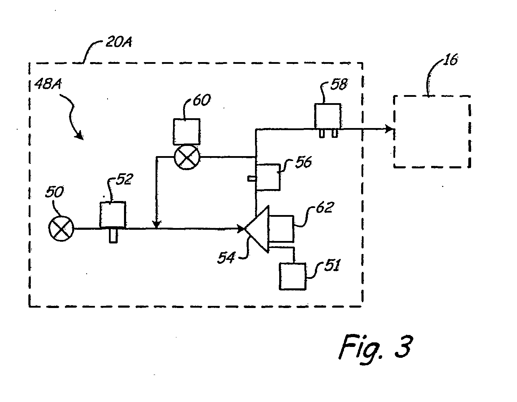

FIG. 3 is a schematic diagram of flow control system 20A having first air supply circuit 48A. As shown in FIG. 3, first air supply circuit 48A includes inlet 50, first motor controller 51, first pressure sensor 52, first compressor 54, second pressure sensor 56, and first temperature sensor 58.

In a preferred embodiment, first compressor 54 is an electric compressor that includes a plurality of rotating compressor blades, and first motor controller 51 is configured to control the speed of the rotating compressor blades. Since the speed of rotating compressor blades is directly related to the flow initiated by an electric compressor, first motor controller 51 may control the flow through first compressor 54 by controlling the speed of the rotating compressor blades. This relationship between compressor speed and flow is commonly referred to as a "speed reference."

The compressor blade speed directed by first motor controller 51 at any moment in time is determined based upon a "required flow rate" communicated to flow control system 20A by temperature control system 16. The required flow rate may vary with time and is a function of, among other things, the altitude of aircraft 10.

First compressor 54 pulls in a first stream of outside air through inlet 50 at the direction of first motor controller 51. First motor controller 51 is configured to receive a signal from temperature control system 16 corresponding to the required flow of air that must be supplied to temperature control system 16. As the first stream of air is directed toward first compressor 54, first pressure sensor 52 senses a first pressure of the first stream of air. The first stream of air is then directed into first compressor 54 where it is compressed and discharged toward temperature control system 16. As the first stream of air is directed toward temperature control system 16, second pressure sensor 56 senses a second pressure of the first stream of air after compression within first compressor 54. In addition, first temperature sensor 58 senses a temperature of the first stream of air after compression within first compressor 54. After entering temperature control system 16, first stream of air will undergo a cycle similar to that shown and described above in reference to FIG. 2.

As shown in FIG. 3, first air supply circuit 48A also includes surge valve 60. When surge valve 60 is in an open position, a portion of the first stream of air that was compressed within first compressor 54 is re-directed back to a point between inlet 50 and an inlet of first compressor 54. Surge valve 60 may serve many purposes including but not limited to creating a hotter compressor output flow as well as controlling the compressor flow to prevent damage caused by compressor surge.

In addition, first compressor 54 may include variable diffuser 62. In one embodiment, variable diffuser 62 is a plurality of channel members disposed near an outlet of first compressor 54. The position of variable diffuser 62 may be adjusted to manipulate the flow of the first stream of air as it exits first compressor 54.

As will be discussed in more detail later, flow control system 20A periodically calculates actual flow through first compressor 54 in order to compare whether the flow that first air supply circuit 48A is providing to temperature control system 16 is consistent with the required flow rate. The flow through first compressor 54 is calculated using the pressure reading from first pressure sensor 52, the pressure reading from second pressure sensor 56, the temperature reading from first temperature sensor 58, an initial speed of the first stream of air from first motor controller 51, and the position of variable diffuser 62. In flow control system 20A, the calculated flow through first compressor 54 represents the air flow supplied to temperature control system 16 unless surge valve 60 is in the open position. In that case, the air flow supplied to temperature control system 16 must be recalculated to take into account the portion of the first stream of air that was diverted back to the inlet of first compressor 54.

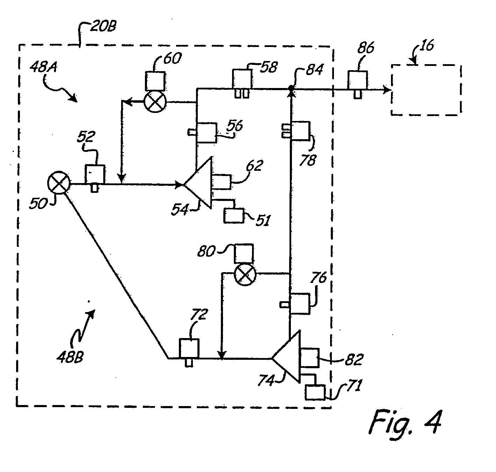

FIG. 4 is a schematic diagram of flow control system 20B. In addition to having first air supply circuit 48A as shown and described above in reference to FIG. 3, flow control system 20B further includes second air supply circuit 48B. As shown in FIG. 4, second air supply circuit 48B includes second motor controller 71, third pressure sensor 72, second compressor 74, fourth pressure sensor 76, and second temperature sensor 78.

In a preferred embodiment, second compressor 74 and second motor controller 71 are similar to first compressor 54 and first motor controller 51 described above. Thus, motor controller 71 is configured to control the flow through second compressor 74 by controlling the speed of a plurality of compressor blades disposed within second compressor 74.

The compressor blade speed directed by second motor controller 71 at any moment in time is determined based upon the required flow rate communicated to flow control system 20B by temperature control system 16. In flow control system 20B, the required flow rates of first and second compressors 54 and 74 will be approximately one-half of the required flow rate of first compressor 54 in flow control system 20A because two compressors are now available for producing the necessary amount of air flow.

Second compressor 74 pulls in a second stream of outside air through inlet 50. As the second stream of air is directed toward second compressor 74, third pressure sensor 72 senses a first pressure of the second stream of air. The second stream of air is then directed into second compressor 74 where it is compressed and discharged toward temperature control system 16. As the second stream of air is directed toward temperature control system 16, fourth pressure sensor 76 senses a second pressure of the second stream of air after compression within second compressor 74. In addition, second temperature sensor 78 senses a temperature of the second stream of air after compression within second compressor 74.

Similar to flow control system 20A of FIG. 3, second air supply circuit 48B also includes surge valve 80 and variable diffuser 82. Except for their position within flow control system 20B, surge valve 80 and variable diffuser 82 operate similar to surge valve 60 and variable diffuser 62 as discussed above in reference to FIG. 3.

As will be discussed in more detail to follow, flow control system 20B also periodically calculates actual flow through second compressor 74 in order to compare whether the flow that second air supply circuit 48B is providing to temperature control system 16 is consistent with the required flow rate.

The first and second streams of air within flow control system 20B merge at point 84, where they form a combined stream of compressed air. After merging at point 84, the combined stream of compressed air flows past flow sensor 86, which measures the flow rate of the combined stream of compressed air before it enters temperature control system 16. As discussed previously, providing temperature control system 16 with the correct flow of outside air is of critical importance to ensure a safe and comfortable cabin environment, as well as to ensure that both temperature control system 16 and flow control system 20B are operating within the regulated guidelines (such as those set by the FAA). Thus, flow sensor 86 is configured to sense the total flow rate of the combined stream of compressed air and compare the sensed flow rate with the total flow rate required by temperature control system 16. By performing this comparison, flow control system 20B controls the accuracy of the air flow it is providing to temperature control system 16. If there is a difference between the sensed flow rate and the required flow rate, then this difference represents an error which is sent to first motor controller 51 and second motor controller 71. In a typical system having a pair of air supply circuits, the required flow rates of the first and second compressors are each adjusted by half of the amount of the error value. By making this adjustment to the required flow rates, the overall accuracy of the combined flow of compressed air provided to temperature control system 16 increases. It is important to note that flow sensor 86 is included in the embodiment shown in FIG. 4 as a flow accuracy test and is not a necessary component of the present invention.

Once again, after the combined stream of compressed air enters temperature control system 16, it will undergo a cycle similar to that shown and described above in reference to FIG. 2.

Although flow control system 20 has been described as having one or two air supply circuits, a flow control system may be designed using any number of air supply circuits without departing from the scope of the present invention. Due to such factors as compressor size and weight, it may be advantageous or even necessary to incorporate numerous air supply circuits into a flow control system instead of a single air supply circuit with one large compressor. Thus, flow control systems with one or two air supply circuits have been described merely for purposes of example and not limitation.

The above discussion in FIGS. 1-4 focused on a system capable of determining actual flow through a compressor without the need for a flow sensor to sense the total flow. The following figures focus on methods for determining the actual flow value and controlling the compressor as a function of the actual flow value.

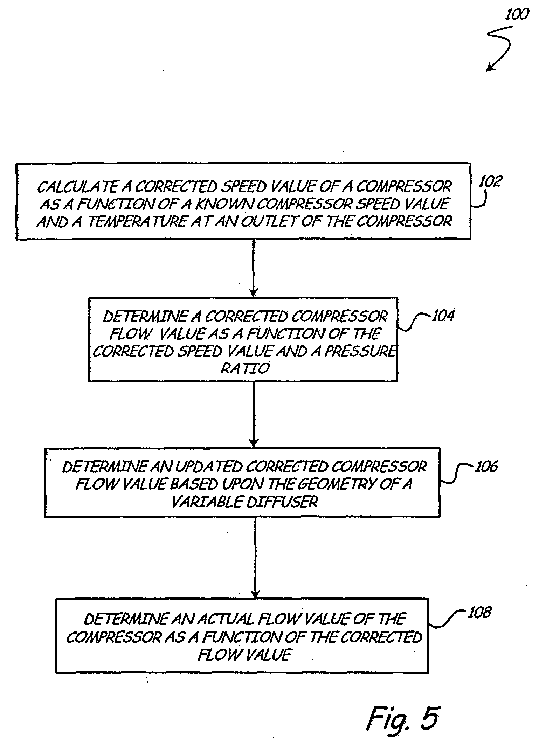

FIG. 5 is a process flow diagram of a method 100 for calculating compressor flow. For purposes of example, method 100 will be discussed in reference to flow control system 20A of FIG. 3. Method 100 begins at step 102 where a corrected speed value of a compressor is calculated as a function of a known compressor speed and a temperature at an outlet of the compressor. In step 102, the known compressor speed may be retrieved from first motor controller 51, while temperature may be retrieved from first temperature sensor 58. As used in FIG. 5, corrected speed is the speed a component (such as a compressor blade assembly) would rotate at if the inlet temperature of the compressor corresponded to ambient conditions at sea level on a standard day (i.e., 288.15 K). In a typical embodiment, corrected speed can be calculated as follows:

$$Corrected\ Speed = \frac{N}{(\sqrt{T} / \sqrt{288.15})}$$

where N is the known compressor speed and T is the outlet temperature of the compressor.

Next, in step 104, a corrected flow value of the compressor is determined as a function of the corrected speed from step 102 and a pressure ratio between an inlet pressure, such as that sensed by first pressure sensor 52, and an outlet pressure, such as that sensed by second pressure sensor 56. In general, every type of compressor has a standard corrected flow characteristic which varies with and is dependent upon a corrected speed and a pressure ratio. Thus, by determining the corrected speed and the pressure ratio, the corrected flow may be determined.

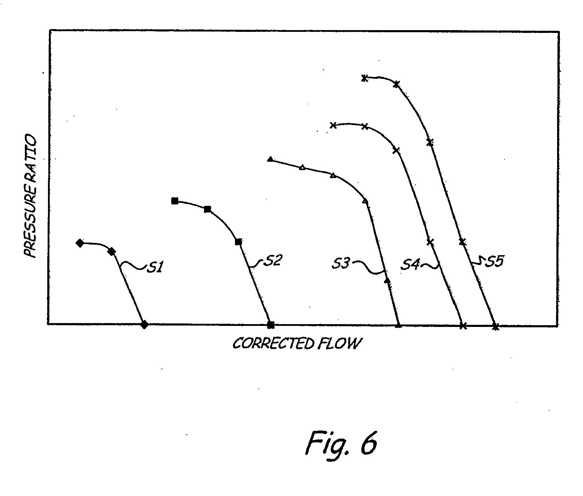

The corrected flow characteristic may be represented graphically by a bi-variant graph such as the one shown in FIG. 6. As shown in FIG. 6, the bi-variant graph depicts the relationship between pressure ratio, corrected flow, and corrected speed. In particular, FIG. 6 shows corrected speed S1, corrected speed S2, corrected speed S3, corrected speed S4, and corrected speed S5 plotted against both pressure ratio and corrected flow. It is important to note that the graph in FIG. 6 is merely an example of a graph depicting the relationship between corrected speed, pressure ratio, and corrected flow. Furthermore, it should be understood that five corrected speed values are shown on the graph merely for purposes of example, and any number of corrected speed values may be plotted on a graph of pressure ratio versus corrected flow.

In reference to the embodiment shown in FIG. 3, step 104 entails finding a corrected flow point on the graph that corresponds with the corrected speed calculated in step 102 and the pressure ratio between the inlet pressure, as sensed by first pressure sensor 54, and the outlet pressure, as sensed by second pressure sensor 56. If the corrected speed value calculated in step 102 does not line up with any of corrected speed curves S 1-S5, then an interpolation must be performed to determine the corrected flow value on the graph.

In the embodiment shown in FIG. 3, first compressor 54 includes variable diffuser 62 configured to modify flow exiting first compressor 54. Whenever a compressor includes such variable diffuser geometry, step 106 must be performed to take into account the effect on compressor flow. However, if variable diffuser 62 was removed from first compressor 54, performance of step 106 would no longer be necessary. In step 106, the corrected flow value is updated as a function of the pressure ratio between the inlet and outlet pressures of the compressor and the geometry of the variable diffuser. Thus, in reference to flow control system 20A, the correct flow value would be updated as a function of the pressure ratio sensed by first pressure sensor 52 and second pressure sensor 56, as well as the geometry of variable diffuser 62. In graphical terms, the presence of a variable diffuser would result in a horizontal shift of the corrected speed values S1-S5. Thus, assuming a constant pressure ratio, every corrected speed value would then correspond with a new corrected flow value. Step 106 of method 100 takes this horizontal shift into account and determines an updated corrected flow value.

Up to this point, what has been determined in method 100 is the corrected flow value through the compressor. In general, corrected flow is the mass flow that would pass through a device, such as a compressor, if the inlet pressure and temperature corresponded to ambient conditions at sea level on a standard day (i.e., 14.696 lbf/in$^2$, 518.7 R) (101 kPa, 288.15K). However, while it was desirable to deal with corrected, normalized values in order to determine the corrected flow, it is uncommon for systems to operate in conditions similar to ambient conditions at sea level on a standard day. Thus, in order to determine the amount of flow actually provided by a flow control system to a temperature control system, an actual flow value must be determined. This actual flow value is determined in step 108 of method 100. Since the actual flow value is a function of the corrected flow value, the actual flow value may be determined by the following equation:

$$Actual\,Flow = \frac{Corrected\,Flow}{(\sqrt{T}\,/\,\sqrt{518.7})\,/\,(P\,/\,14.696)}$$

where T is the temperature of the flow at the outlet of the compressor, and P is the pressure ratio between the inlet and outlet of the compressor.

In some instances, the various steps comprising method 100 may be performed in a slightly different order. Furthermore, one or more of the steps may be omitted without departing from the intended scope of the present invention. For example, as stated above, step 106 may be omitted in an embodiment of the present invention that does not include a variable diffuser.

By performing method 100, it is possible to calculate the actual flow provided to temperature control system 16 by first air supply circuit 48A of flow control system 20A. Similarly, in flow control systems that include multiple air supply circuits, it is possible to calculate the actual flow provided to a temperature control system by performing method 100 for each air supply circuit and adding each of the actual flow values to determine a total flow value provided to the temperature control system. Thus, a flow control system having any number of air supply circuits is contemplated.

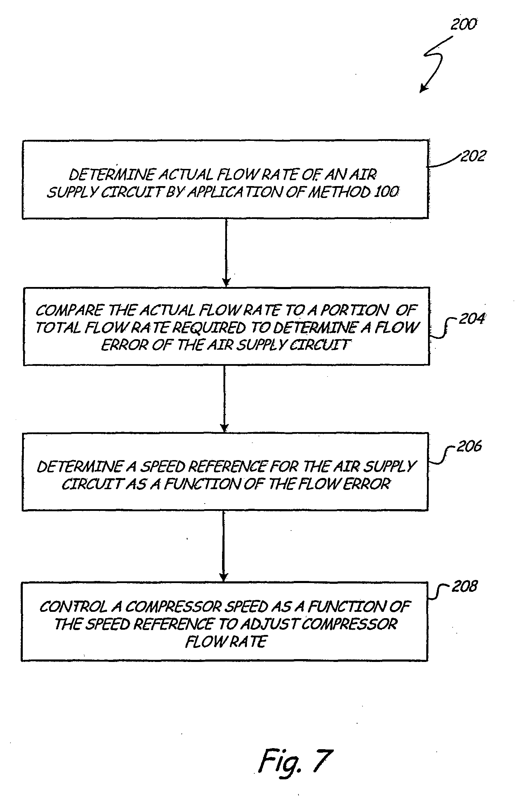

FIG. 7 is a process flow diagram of a method 200 for adjusting compressor flow rate as a function of a compressor speed reference. For purposes of example, method 200 will also be discussed in reference to flow control system 20A of FIG. 3. Method 200 begins at step 202 where an actual flow rate of an air supply circuit, such as first air supply circuit 48A, is determined by application of method 100. Next, in step 204, the actual flow rate determined in step 202 is compared to a portion of a total flow rate required by a temperature control system to determine a flow error of the air supply circuit. In reference to flow control system 20A of FIG. 3, step 204 compares the actual flow rate of first air supply circuit 48A to the portion of the total flow rate expected from the circuit, which would be 100 percent of the total flow rate in an embodiment having only one air supply circuit. Then, in step 206, a speed reference for the air supply circuit is determined as a function of the flow error determined in step 204. In one embodiment, the flow error is provided as an input to a proportional plus integral control algorithm to generate the compressor speed reference. However, any method of generating a compressor speed reference is contemplated. Finally, in step 208, the flow rate of the air supply circuit is adjusted as a function of the speed reference determined in step 206. In reference to flow control system 20A of FIG. 3, step 208 involves providing the speed reference to first motor controller 51, which in turn controls the speed of first compressor 54 as a function of the speed reference to adjust compressor flow rate.

Although method 200 was described in reference to a flow control system having a single air supply circuit, method 200 is applicable to a flow control system having any number of air supply circuits. For purposes of example, method 200 will now be described in reference to flow control system 20B of FIG. 4, which includes first air supply circuit 48A and second air supply circuit 48B.

Once again, method 200 begins at step 202 where an actual flow rate of both first and second air supply circuits is determined by application of method 100 to each circuit. Next, in step 204, the actual flow rates determined in step 202 are compared to the portions of the total flow rate required by temperature control system 16 to determine flow errors of first and second air supply circuits 48A and 48B. In an embodiment such as flow control system 20B having two air supply circuits, the temperature control system typically requires each circuit to supply one-half of the total flow required. However, temperature control systems that require different portion amounts from different air supply circuits are also contemplated. In this example, it is presumed that the portion of the total flow rate required of first and second air supply circuits 48A and 48B is one-half. Then, in step 206, speed references for first and second air supply circuits 48A and 48B are determined as a function of the flow errors determined in step 204. Finally, in step 208, the flow rates of first and second air supply circuits 48A and 48B are adjusted as a function of the speed references determined in step 206, such as by adjusting the speeds of first compressor 54 and second compressor 74.

Depending upon the specific needs of a system and the accuracy of the flow monitoring required, methods 100 and 200 may be performed continuously, at a desired frequency, at the direction of an operator, or upon the occurrence of a particular event. For example, in one embodiment, it may desirable to perform methods 100 and 200 at a frequency of 20 Hz whenever temperature control system 16 is in operation. In another embodiment, it may be desirable to perform methods 100 and 200 only upon the sensing of a predetermined outlet temperature of a compressor.

Although the above discussion has focused on providing cool air to cabin 18, temperature control system 16 may also provide warm air to cabin 18. Thus, a temperature control system that provides both heating and cooling may be used with the flow control system of the present invention.

The terminology used herein is for the purpose of description, not limitation. Specific structural and functional details disclosed herein are not to be interpreted as limiting, but merely as bases for teaching one skilled in the art to variously employ the present invention. Although the present invention has been described with reference to preferred embodiments, workers skilled in the art will recognize that changes may be made in form and detail without departing from the scope of the invention which is defined by the claims.

**Claims**

1. A system for controlling air flow, the system comprising:

   an inlet (50) configured to direct a first stream of air into the system;
   a first pressure sensor (52) for sensing a first pressure of the first stream of air;
   a first compressor (54) configured to pull in the first stream of air through the inlet and compress the first stream of air;
   a second pressure sensor (56) for sensing a second pressure of the first stream of air;
   a first temperature sensor (58) for sensing a temperature of the first stream of air after compression in the first compressor; and
   a first controller (51) for controlling a speed of the first compressor as a function of a desired flow rate of the first stream of air and a calculated flow rate of the first stream of air.

2. The system of claim 1, wherein the first controller determines the calculated flow rate of the first stream of air using the first pressure, the second pressure, the temperature, and an initial speed of the first stream of air.

3. The system of claim 2, wherein the first compressor (54) is an electric compressor.

4. The system of claim 3, wherein the first controller is configured to control rotation of a plurality of fan blades disposed within the first compressor.

5. The system of claim 4, wherein the first compressor further includes a variable diffuser (62), and wherein a position of the variable diffuser is also used to determine the calculated flow rate.

6. The system of claim 1, and further comprising:

   a third pressure sensor (72) for sensing a first pressure of a second stream of air directed into the system by the inlet;
   a second compressor (74) configured to pull in the second stream of air through the inlet (54) and compress the second stream of air;
   a fourth pressure sensor (76) for sensing a second pressure of the second stream of air;
   a second temperature sensor (78) for sensing a temperature of the second stream of air after compression in the second compressor; and
   a second controller (71) for controlling a speed of the second compressor as a function of a desired flow rate of the second stream of air and a calculated flow rate of the second stream of air.

7. The system of claim 6, wherein the first (54) and second (74) compressors are electric compressors.

8. The system of claim 7, wherein the first and second streams of air merge together (84) to form a combined stream of air.

9. The system of claim 8, and further comprising a flow sensor (86) configured to determine a flow rate of the combined stream of air.

10. A method of controlling air flow in a system, the method comprising the steps of:

    calculating a flow rate of a stream of air exiting a compressor (54);
    comparing the calculated flow rate with a desired flow rate of the stream of air exiting the compressor to determine a difference; and
    controlling speed of the compressor based upon the difference to adjust the speed of the compressor so that the calculated flow rate is substantially equivalent to the desired flow rate.

11. The method of claim 10, wherein the step of calculating a flow rate is based upon a speed of the stream of air entering the compressor, a pressure drop of the stream of air within the compressor, and a temperature of the stream of air after compression within the compressor.

**12.** The method of claim 11, wherein the compressor includes a variable diffuser (62), and wherein a position of the variable diffuser is a component of the calculated flow rate of the stream of air exiting the compressor.

**13.** The method of claim 12, wherein the steps are repeated at a defined frequency.

**14.** The method of claim 13, wherein the frequency is about 20 Hz.

**15.** A method as claimed in any of claims 10 to 14, the method comprising:

directing a first stream of uncompressed air into the system through an inlet;
determining an initial speed of the first stream of uncompressed air;
sensing a first pressure of the first stream of uncompressed air;
compressing the first stream of uncompressed air in a first compressor and discharging a first stream of compressed air from the compressor;
sensing a pressure of the first stream of compressed air;
determining a pressure drop by calculating the difference between the first and second pressures;
sensing a temperature of the first stream of compressed air;
calculating a flow rate of the first stream of compressed air based upon the initial speed of the first stream of uncompressed air, the pressure drop, and the temperature of the first stream of compressed air;
comparing the calculated flow rate with a desired flow rate to determine a difference; and
controlling speed of the first compressor based upon the difference to adjust the speed of the first compressor so that the calculated flow rate of the first stream of compressed air is substantially equivalent to the desired flow rate of the first stream of compressed air.

**16.** The method of claim 15, wherein the first compressor is an electric compressor.

**17.** The method of claim 15 or 16, and further comprising:

directing a second stream of uncompressed air into the system through the inlet;
determining an initial speed of the second stream of uncompressed air;
sensing a first pressure of the second stream of uncompressed air;
compressing the second stream of uncompressed air in a second compressor and discharging a second stream of compressed air from the compressor;
sensing a pressure of the second stream of compressed air;
determining a pressure drop by calculating the difference between the first and second pressures;
sensing a temperature of the second stream of compressed air;
calculating a flow rate of the second stream of compressed air based upon the initial speed of the second stream of uncompressed air, the pressure drop, and the temperature of the second stream of compressed air;
comparing the calculated flow rate with a desired flow rate of the second stream of compressed air to determine a difference; and
controlling speed of the second compressor based upon the difference to adjust the speed of the second compressor so that the calculated flow rate of the second stream of compressed air is substantially equivalent to the desired flow rate of the second stream of compressed air.

**18.** The method of claim 17, and further comprising the step of merging the first and second streams of compressed air to form a combined stream of compressed air.

**19.** The method of claim 18, and further comprising the steps of:

sensing a flow rate of the combined stream of compressed air with a flow sensor; comparing the flow rate of the combined stream of compressed air with the desired flow rates of the first and second streams of compressed air to determine an error; and
using the error to adjust the desired flow rates of the first and second streams of compressed air.

Fig. 1

Fig. 2

Fig. 3

Fig. 4

_100_

```
┌─────────────────────────────────────────────┐
│ CALCULATE A CORRECTED SPEED VALUE OF A        │  _102_
│ COMPRESSOR AS A FUNCTION OF A KNOWN            │
│ COMPRESSOR SPEED VALUE AND A TEMPERATURE       │
│ AT AN OUTLET OF THE COMPRESSOR                 │
└─────────────────────────────────────────────┘
                      │
                      ▼
        ┌─────────────────────────────────┐
        │ DETERMINE A CORRECTED COMPRESSOR  │  _104_
        │ FLOW VALUE AS A FUNCTION OF THE   │
        │ CORRECTED SPEED VALUE AND A        │
        │ PRESSURE RATIO                     │
        └─────────────────────────────────┘
                      │
                      ▼
     ┌───────────────────────────────────────┐
     │ DETERMINE AN UPDATED CORRECTED          │  _106_
     │ COMPRESSOR FLOW VALUE BASED UPON THE    │
     │ GEOMETRY OF A VARIABLE DIFFUSER         │
     └───────────────────────────────────────┘
                      │
                      ▼
     ┌───────────────────────────────────────┐
     │ DETERMINE AN ACTUAL FLOW VALUE OF THE   │  _108_
     │ COMPRESSOR AS A FUNCTION OF THE         │
     │ CORRECTED FLOW VALUE                    │
     └───────────────────────────────────────┘
```

_Fig. 5_

Fig. 6

*200*

DETERMINE ACTUAL FLOW RATE OF AN AIR
SUPPLY CIRCUIT BY APPLICATION OF METHOD 100 — *202*

COMPARE THE ACTUAL FLOW RATE TO A PORTION OF
TOTAL FLOW RATE REQUIRED TO DETERMINE A FLOW
ERROR OF THE AIR SUPPLY CIRCUIT — *204*

DETERMINE A SPEED REFERENCE FOR THE AIR SUPPLY
CIRCUIT AS A FUNCTION OF THE FLOW ERROR — *206*

CONTROL A COMPRESSOR SPEED AS A FUNCTION OF
THE SPEED REFERENCE TO ADJUST COMPRESSOR
FLOW RATE — *208*

*Fig. 7*

**European Patent Office**

## EUROPEAN SEARCH REPORT

Application Number

EP 07 25 2624

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 640 673 A (HAMILTON SUNDSTRAND CORP [US]) 29 March 2006 (2006-03-29) * paragraphs [0001] - [0004] * * paragraphs [0013] - [0017] * * paragraph [0021] * * claims 9,10 * * figure 1 * | 1-19 | INV. B64D13/06 |
| X | US 2005/126204 A1 (PICCIRILLI DAVIDE F [US] ET AL PICCIRILLI DAVIDE FAUSTO [US] ET AL) 16 June 2005 (2005-06-16) | 1,10 | |
| A | * paragraphs [0002], [0003] * | 2-9, 11-19 | |
| | * paragraphs [0021] - [0023] * * paragraph [0035] * * figure 1 * | | |
| A | US 6 629 428 B1 (MURRY ROGER P [US]) 7 October 2003 (2003-10-07) * column 1, lines 7-16 * * column 3, line 20 - column 4, line 37; figures 2,3 * | 1-19 | TECHNICAL FIELDS SEARCHED (IPC) B64D |

The present search report has been drawn up for all claims

| Place of search | Date of completion of the search | Examiner |
|---|---|---|
| Munich | 28 September 2007 | Weber, Carlos |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.** EP 07 25 2624

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2007

| Patent document cited in search report | | Publication date | Patent family member(s) | | Publication date |
|---|---|---|---|---|---|
| EP 1640673 | A | 29-03-2006 | US | 2006059927 A1 | 23-03-2006 |
| US 2005126204 | A1 | 16-06-2005 | NONE | | |
| US 6629428 | B1 | 07-10-2003 | EP | 1578664 A2 | 28-09-2005 |
| | | | WO | 2004037642 A2 | 06-05-2004 |